# EUROPÄISCHE PATENTSCHRIFT

(11) **EP 1 435 214 B1**
(45) Veröffentlichungstag und Bekanntmachung des Hinweises auf die Patenterteilung: **20.02.2008**
(21) Anmeldenummer: 03029103.3
(22) Anmeldetag: 17.12.2003
(51) Int. Cl.: A47J 43/07

(54) **Becheranordnung für ein Küchengerät**
Container-arrangement for kitchen device
Agencement du récipient pour un appareil de cuisine

(30) Priorität: 30.12.2002 DE 10261368
(43) Veröffentlichungstag der Anmeldung: 07.07.2004
(73) Patentinhaber: BSH Bosch und Siemens Hausgeräte GmbH, 81739 München (DE)
(72) Erfinder: Pavlovic, Henrik, 3333 Ljubno ob Savinji (SI); Sedovsek, Aleksander, 3330 Mozirje (SI); Semeja, Uros, 3327 Smartno ob Paki (SI); Zibret, Igor, 3327 Smartno ob Paki (SI)

(56) Entgegenhaltungen:
- DE-C1- 3 632 688
- US-A- 3 785 579
- US-A- 4 297 038
- PATENT ABSTRACTS OF JAPAN Bd. 2000, Nr. 11, 3. Januar 2001 (2001-01-03) & JP 2000 210206 A (MATSUSHITA ELECTRIC IND CO LTD), 2. August 2000 (2000-08-02)

## Beschreibung

Die Erfindung betrifft eine Becheranordnung für ein Küchengerät, insbesondere für eine Mischzerkleinerungsvorrichtung, gemäß Oberbegriff des Patentanspruchs 1.

Mischzerkleinerungsvorrichtungen für den Haushalt sind bekannt. Diese sog. Blender weisen ein Motorgehäuse mit einem elektrischen Antriebsmotor und einen auf eine Oberseite des Gehäuses aufsetzbaren Becher auf, in dessen unterem Bereich eine Messerwelle um eine vertikale Achse rotieren kann. Der unten offene Becher kann zusammen mit einem Bodenbereich vom Gehäuse abgenommen werden, um den darin zuvor zerkleinerten und/oder fein durchmischten Inhalt in ein Gefäß entleeren zu können. Der Bodenbereich ist typischerweise als sog. Becherträger ausgestaltet, der den damit verbundenen Becher nach außen und zum Motor hin abdichtet und der gleichzeitig eine Halterung für die von einer Abtriebswelle des Antriebsmotor trennbare Werkzeugwelle bildet. Die Werkzeugwelle kann bspw. mittels eines im Becherträger fixierbaren und ein Gleitlager aufweisenden Lagerschilds zentriert sein. Aufgrund der relativ groben Zentrierung des Lagerschilds im Becherträger kann jedoch die Koaxialität der Werkzeugwelle zur Abtriebswelle des Antriebsmotors beeinträchtigt sein.

Im Dokument JP 2000 210206 A wird ein gattungsgemäßes Küchengerät gezeigt.

Eine Aufgabe der vorliegenden Erfindung besteht darin, bei einem gattungsgemäßen Küchengerät die Lagerung und den Rundlauf einer rotierenden Werkzeugwelle zu verbessern.

Diese Aufgabe wird mit einer Becheranordnung für ein Küchengerät mit den im Patentanspruch 1 genannten Merkmalen dadurch gelöst, dass eine Zentriereinrichtung radial innerhalb eines radialen Bundes des Becherträgers und eines ringförmigen Abschnitts des Lagerschilds angeordnet ist. Der Lagerschild ist somit im Becherträger radial zentriert. Auf diese Weise kann eine weitgehende Koaxialität der rotierenden Werkzeugwelle mit der Abtriebswelle des Antriebsmotors erreicht werden, was eine Reduzierung der Vibrationen und der Geräuschentwicklung zur Folge hat. Da zudem üblicherweise zwischen Motorwelle und Werkzeugwelle eine Kupplung vorgesehen ist, kann eine möglichst gute Zentrierung der Werkzeugwelle deren Exzentrizität reduzieren, so dass sie sich im laufenden Betrieb weniger stark erwärmt. Die Kupplung besteht meist aus Kunststoff und kann gewisse Rundlaufabweichungen durch Verformung ausgleichen. Durch die dabei entstehende Walkarbeit erwärmt sich die Kupplung allerdings relativ stark.

Eine Ausführungsform der Erfindung sieht vor, dass als Zentriereinrichtung axial sich erstreckende, gleichmäßig am Umfang verteilte Vorsprünge und dazu passende Aussparungen am Lagerschild und Becherträger oder stufige Absätze am Lagerschild und dazu passende stufige Absätze am Becherträger vorgesehen sind. Diese Ausgestaltung kann ggf. auf geschlossene ringförmige radiale Passflächen verzichten und weist zumindest zueinander passende Flächen zur Zentrierung des Lagerschilds auf.

Eine Verbindungseinrichtung zum Montieren des Becherträgers auf dem Becher sieht vorzugsweise eine Gewindeverbindung vor. Die erfindungsgemäße Becheranordnung sorgt dafür, dass in montiertem Zustand ein Fußabschnitt des Bechers den ringförmigen Abschnitt des Lagerschilds gegen den ringförmigen Bund des Becherträgers presst. Auf diese Weise kann einerseits eine dichte Verbindung und andererseits eine gute Zentrierung des Lagerschilds und damit der Werkzeugwelle erreicht werden. Der Lagerschild, der einen Teil einer Abdichtung des Bechers nach unten bilden kann, ist bei aufgesetztem Becher im Becherträger in axialer Richtung fixiert, wodurch eine präzise und laufruhige Lagerung der Werkzeugwelle erreicht werden kann. Die axiale Fixierung bildet gleichzeitig einen axialen Anschlag, der durch die Position einer in Eingriff befindlichen Kupplung zwischen einer Motorabtriebswelle und der Werkzeugwelle definiert ist.

Die Erfindung kann vorsehen, dass der äußerer ringförmige Abschnitt des Lagerschilds bei aufgesetztem Becher den ringförmigen Bund des Becherträgers umgreift und mit diesem form- und/oder kraftschlüssig verbunden ist. Gegenüber einer herkömmlichen Zentrierung des Lagerschilds an dessen äußerem Umfang kann hierdurch eine wesentlich präzisere Führung erreicht werden, denn eine Außenzentrierung ist durch die an der Innenmantelfläche des Becherträgers angeordnete Verriegelungseinrichtung zum Becher beeinträchtigt. Die Verriegelungseinrichtung kann insbesondere ein Innengewinde oder ein Bajonettverschluss sein, so dass die Passflächen in der Gewindeauslaufzone angeordnet wären. Zudem erfordert die leichte Montierbarkeit des Bechers einen relativ großen Spalt zwischen Becherträger und Lagerschild. Beides beeinträchtigt die Passflächen und führt zu einer nicht optimalen Zentrierung. Dem gegenüber weist eine Ausgestaltung der Erfindung einen Ausgleichsspalt zwischen Becherträger und radial außerhalb des ringförmigen Abschnitts des Lagerschilds auf, wodurch die beschriebenen Nachteile vermieden werden können.

Zwischen Becherträger und Küchengerät ist vorzugsweise eine weitere Verbindungseinrichtung vorgesehen, die insbesondere als Bajonettverbindung ausgebildet sein kann. Die konzentrisch zur Achse der Werkzeugwelle angeordnete Bajonettverbindung sorgt für eine schnelle und einfache Abnehmbarkeit des Becherträgers. Bei einer solchen Bajonettverbindung lassen sich zudem Passflächen vorsehen, die für eine gute Zentrierung in der Aufnahme des Küchengeräts sorgen.

Vorzugsweise weist der äußere Ring des Lagerschilds eine Dichtung zur Abdichtung des aufgesetzten Bechers auf. Der Lagerschild weist somit eine Mehrfachfunktion auf, indem er zum einen die Axial- und Radiallagerung der Werkzeugwelle bildet, zudem für die gute Abdichtung der Becherunterseite sorgt und gleichzeitig bei abgenommenem Becher dafür sorgt, dass die Werkzeugwelle antriebsseitig von der Motorabtriebswelle entkoppelt wird.

Bei abgenommenem Becher ist der Lagerschild vorzugsweise von seiner Zentrierung abgehoben. Dies kann dafür sorgen, dass die Antriebskoppelung der Werkzeugwelle von der Motorabtriebswelle unterbrochen ist. Diese Entkoppelung ist aus Sicherheitsgründen notwendig, um zu verhindern, dass die Werkzeugwelle bei abgenommenem Becher rotieren und zu Verletzungen führen kann.

Weitere Aspekte und vorteilhafte Weiterbildungen der Erfindung ergeben sich aus den abhängigen Ansprüchen sowie aus der nachfolgenden Figurenbeschreibung.

Nachstehend wird die Erfindung anhand eines Ausführungsbeispiel unter Bezugnahme auf die beiliegenden Zeichnungen näher erläutert. Dabei zeigt:
- Figur 1: eine schematische Schnittdarstellung eines erfindungsgemäßen Küchengeräts,
- Figur 2: ein Detailschnitt einer Zentrierung eines Lagerschilds bei abgenommenem Becher und
- Figur 3: eine Zentrierung des Lagerschilds bei aufgesetztem Becher.

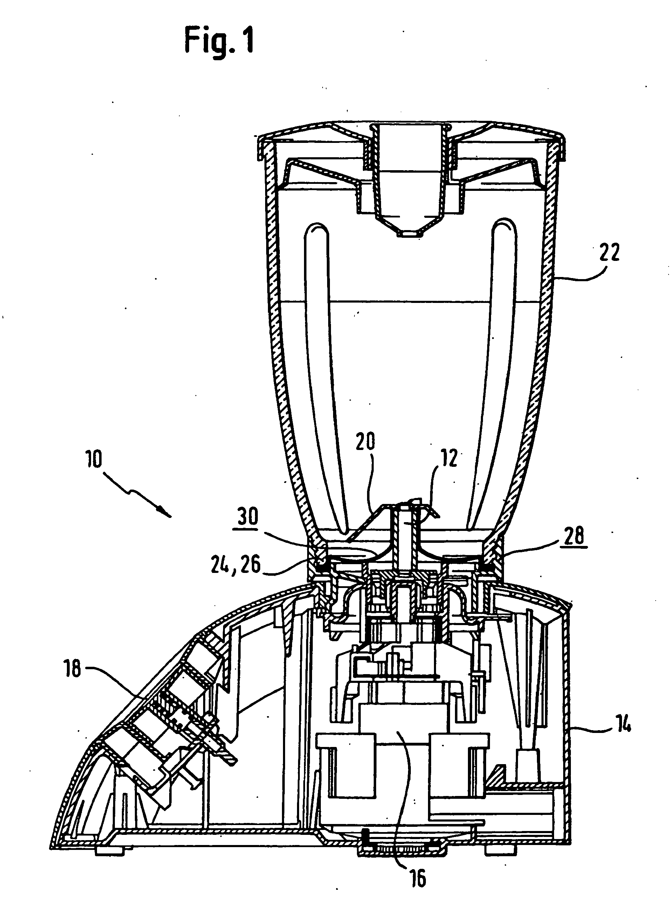

Figur 1 zeigt ein erfindungsgemäßes Küchengerät in einer schematischen Schnittdarstellung. Im gezeigten Ausführungsbeispiel ist das Küchengerät 10 eine an sich bekannte Mischzerkleinerungsvorrichtung. Das Küchengerät 10 weist eine rotierende Werkzeugwelle 12 auf und umfasst ein Gehäuse 14 mit einer darin angeordneten Antriebsvorrichtung, vorzugsweise einem elektrischen Antriebsmotor 16, sowie einer Betätigungseinrichtung 18 zur manuellen Steuerung der Funktionen des Küchengeräts 10. Die Werkzeugwelle 12 mit daran angeordneten Messern 20 weist eine vertikale Drehachse 13 auf und ragt in einen Becher 22, der auf eine Oberseite des Gehäuses 14 aufgesetzt ist und bei Bedarf hiervon abgenommen werden kann. Der Becher 22 weist eine offene Unterseite 24 mit einem ringförmigen Fußabschnitt 26 auf, der eine zylindrische Außenmantelfläche mit einem darauf befindlichen Außengewinde oder einer Bajonettpassung o. dgl. aufweist. Diese korrespondiert mit einem entsprechenden Innengewinde bzw. einer Gegenpassung einer Bajonettverriegelung eines Becherträgers 28 und bildet somit eine Verbindungseinrichtung zwischen Becher 22 und Becherträger 28. Der Becherträger 28 kann gemeinsam mit dem Becher 22 vom Gehäuse 14 abgenommen werden und dichtet in diesem Fall die offene Unterseite 24 des Bechers 22 ab. Diese weitere Verbindungseinrichtung zwischen Becherträger 28 und Gehäuse 14 der Küchenmaschine 10 kann insbesondere als Bajonettverbindung ausgebildet sein. Bei fest mit dem Becherträger 28 verbundenem Becher 22 bleibt die Werkzeugwelle 12 auch bei abgenommenem Becher 22 mit diesem verbunden, da die Werkzeugwelle 12 in einem Lagerschild 30 gelagert ist, der zwischen Becher 22 und Becherträger 28 fixiert ist.

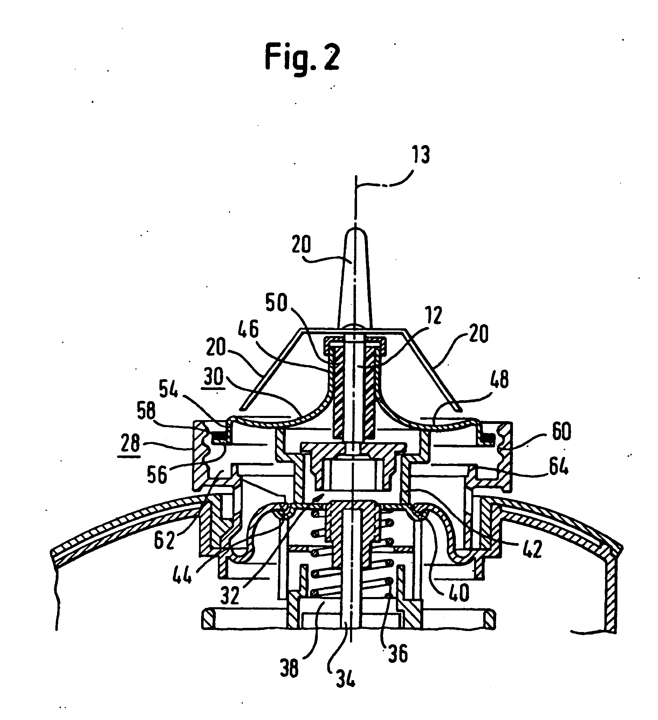

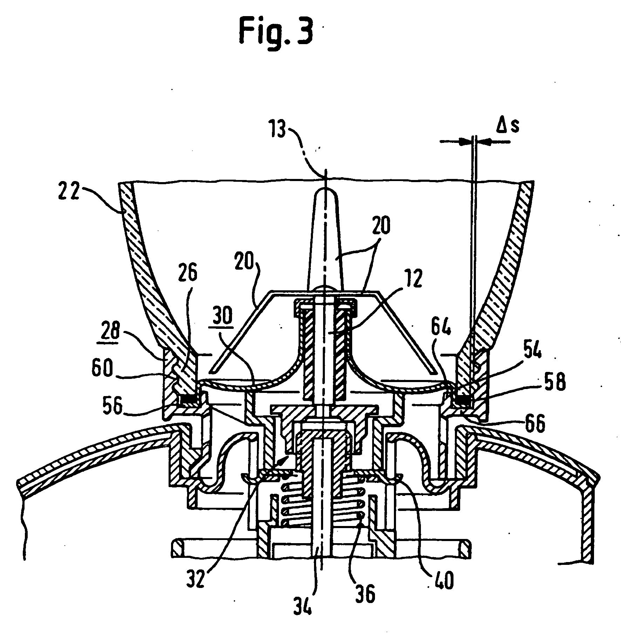

Die Werkzeugwelle 12 kann aufgrund des im Becherträger 28 zentrierten Lagerschilds 30 mit minimaler Exzentrizität rotieren. Diese Zentrierung wird anhand der Figuren 2 und 3 näher erläutert.

Sobald der Becher 22 vom Becherträger 28 abgenommen ist, liegt die Werkzeugwelle 12 mit den daran verankerten Messern 20 frei. Um zu verhindern, dass die rotierenden Messer 20 bei einer Berührung zu Verletzungen führen können, ist in diesem Fall der Antriebsmotor 16 von der Werkzeugwelle 12 entkoppelt (Figur 2). Zu diesem Zweck ist eine Kupplung 32 zwischen einer Abtriebswelle 34 des Antriebsmotors und der Werkzeugwelle 12 vorgesehen, die bei einer axialen Verschiebung der Werkzeugwelle 12 nach oben den Kraftschluss unterbricht. Eine konzentrisch um die Kupplung 32 angeordnete Schraubenfeder 36 stützt sich einerseits an einem Gehäuseabsatz 38 und andererseits an einer axial beweglichen Scheibe 40 ab, die über eine Hülse 42 mit dem Lagerschild 30 in Verbindung steht. Bei abgenommenem Becher 22 drückt die Schraubenfeder 36 die Scheibe 40 bis zu einem Anschlagring 44 nach oben, der Teil des Gehäuses 14 ist. Die auf der Scheibe 40 aufsitzende Hülse 42 drückt den Lagerschild 30 so weit nach oben, dass die Kupplung 32 getrennt und die Werkzeugwelle 12 aus ihrem Eingriff mit der Abtriebswelle 34 des Antriebsmotors 16 gebracht ist.

Werkzeugwelle 12, Abtriebswelle 34, Kupplung 32, Lagerschild 30, Schraubenfeder 36, Scheibe 40, Hülse 42 und Anschlagring 44 sind jeweils konzentrisch zur Achse 13 angeordnet.

Der kreisrunde Lagerschild 30 weist eine dachförmige Kontur mit einem inneren, rohrförmigen Abschnitt 46 auf, in dessen abschnittsweise zylindrische Innenmantelfläche ein längliches Gleitlager 50 eingesetzt ist, das eine axiale und radiale Lagerung für die Werkzeugwelle 12 bildet. Der Lagerschild 30 weist einen daran anschließenden schüsselförmigen mittleren Abschnitt 48 auf, an dessen Unterseite die Hülse 42 anliegt. Ein hieran anschließender ringförmiger äußerer Abschnitt 52 des Lagerschilds 30 ist gestuft ausgebildet, so dass ein Übergang des schüsselförmigen mittleren Abschnitts 48 zu einem kurzen hohlzylindrischen Abschnitt 54 gebildet ist. An dessen oberem Rand setzt mit kleinem Radius der äußere Rand des mittleren Abschnitts 48 an. Am unteren Rand des hohlzylindrischen Abschnitts 54 ist ein radialer ringförmiger Abschnitt 56 angesetzt, der eine Auflage für eine Dichtung 58 bildet.

Bei auf den Becherträger 28 aufgesetztem Becher 22 ist dessen, mit einem Außengewinde versehener Fußabschnitt 26 mit dem Innengewinde 60 des Becherträgers 28 verschraubt (Figur 3). Hierbei drückt die untere ringförmige Kante am Becherfuß 26 des Bechers 22 den ringförmigen Abschnitt 56 des Lagerschilds 30 gegen die Rückstellkraft der Schraubenfeder 36 nach unten, bis der ringförmige Abschnitt 56 auf einem Grund eines radialen ringförmigen Bundes 66 des Becherträgers 28 aufliegt. Die ringförmige Dichtung 58 sorgt hierbei für die Abdichtung des Bechers 22 gegen den nach unten geschlossenen Becherträger 28.

Beim Aufsetzen des Bechers 22 wird gleichzeitig der Lagerschild 30 im Becherträger 28 zentriert. Dies erfolgt durch eine Passung der Innenmantelfläche des hohlzylindrischen Abschnitts 54 auf einem Zentrierbund 64, der am inneren Radius des ringförmigen Bundes 66 nach oben ragt und für einen passenden Sitz des Lagerschilds 30 sorgt. Hierdurch wird dieser in radialer Richtung zentriert, so dass die Werkzeugwelle 12 mit minimaler Exzentrizität rotiert. Gleichzeitig bildet die Ringnut 62 einen Anschlag in axialer Richtung.

Zwischen dem äußerem Umfang des radialen ringförmigen Abschnittes 56 des Lagerschilds 30 und dem Innengewinde 60 des Becherträgers 28 verbleibt ein Ausgleichsspalt Δs, so dass keine radiale Berührung stattfindet. Der Ausgleichsspalt Δs verhindert, dass der Lagerschild 30 im Gewindeauslauf des Innengewindes 30 des Becherträgers 28 durch Fertigungsabweichungen aus seiner zentrierten Lage gebracht wird.

Eine solche Zentrierung der Werkzeugwelle 12 ist aufgrund der nur eine ungenügende radiale Zentrierung ermöglichenden Kupplung 32 sinnvoll und kann zu einer deutlichen Reduzierung von rotationsbedingten Vibrationen und Geräuschemissionen führen. Die Passung zwischen dem hohlzylindrischen Abschnitt 54 und dem Zentrierbund 64 weist vorzugsweise nur ein minimales Spiel auf, sollte jedoch nicht so stramm sitzen, dass die durch die Schraubenfeder 36 bewirkte Axialbewegung des Lagerschilds 30 bei abgenommenem Becher 22 beeinträchtigt wird.

## Patentansprüche

1. Becheranordnung für ein Küchengerät mit einem Bechers (22), einem eine Werkzeugwelle (12) lagernden Lagerschild (30), einem Becherträger (28) und einer Zentriereinrichtung, die den Lagerschild (30) gegenüber dem Becherträger (28) koaxial zur Achse (13) der Werkzeugwelle (12) positioniert, wobei der Becherträger (28) einen radialen, ringförmigen Bund (66) hat, an dem ein radialer ringförmiger Abschnitt (56) des Lagerschilds (30) anliegt, **dadurch gekennzeichnet, dass** die Zentriereinrichtung radial innerhalb des radialen Bundes (66) des Becherträgers (28) und des ringförmigen Abschnitts (56) des Lagerschilds (30) angeordnet ist.

2. Becheranordnung nach Anspruch 1, **dadurch gekennzeichnet, dass** als Zentriereinrichtung axial sich erstreckende, gleichmäßig am Umfang verteilte Vorsprünge und dazu passende Aussparungen am Lagerschild (30) und Becherträger (28) oder stufige Absätze am Lagerschild (30) und dazu passende stufige Absätze am Becherträger (28) vorgesehen sind.

3. Becheranordnung nach Anspruch 1 oder 2; **dadurch gekennzeichnet, dass** eine Verbindungseinrichtung, bevorzugt eine Gewindeverbindung zum Montieren des Becherträgers (28) auf dem Becher (22) vorgesehen ist, und dass in montiertem Zustand ein Fußabschnitt (26) des Bechers (22) den ringförmigen Abschnitt (56) des Lagerschilds (30) gegen den ringförmigen Bund (66) des Becherträgers (28) presst.

4. Becheranordnung nach einem der Ansprüche 1 bis 3, **dadurch gekennzeichnet, dass** zwischen Becherträger (28) und radial außerhalb des ringförmigen Abschnitts (56) des Lagerschilds (30) ein Ausgleichsspalt (As) vorgesehen ist.

5. Becheranordnung nach einem der Ansprüche 1 bis 4, **dadurch gekennzeichnet, dass** eine weitere Verbindungseinrichtung, bevorzugt eine Bajonettverbindung zwischen Becherträger (28) und Küchengerät (10) vorgesehen ist, wobei die Bajonettverbindung konzentrisch zur Achse (13) der Werkzeugwelle (12) angeordnet ist.

6. Becheranordnung nach einem der Ansprüche 1 bis 5, **dadurch gekennzeichnet, dass** der Lagerschild (30) einen Teil einer Abdichtung des Bechers (22) nach unten bildet.

7. Becheranordnung nach einem der Ansprüche 1 bis 6, **dadurch gekennzeichnet, dass** zwischen ringförmigem Abschnitt (56) des Lagerschilds (30) und ringförmigem Fußabschnitt (26) des Bechers (22) eine ringförmige Dichtung (58) zur Abdichtung des aufgesetzten Bechers (22) vorgesehen ist.

8. Becheranordnung nach einem der Ansprüche 1 bis 7, **dadurch gekennzeichnet, dass** der Lagerschild (30) bei abgenommenem Becher (22) von seiner Zentrierung abgehoben ist.

## Claims

1. Beaker arrangement for a kitchen appliance with a beaker (22), a bearing panel (30) mounting a work tool (12), a beaker support (28) and a centring device, which positions the bearing panel (30) relative to the beaker support (28) coaxially with respect to the axis (13) of the tool shaft (12), wherein the beaker support (28) has a radial annular collar (66) against which a radial annular section (56) of the bearing panel (30) bears, **characterised in that** the centring device is arranged radially within the radial collar (66) of the beaker carrier (28) and the annular section (56) of the bearing panel (30).

2. Beaker arrangement according to claim 1, **characterised in that** axially extending projections, which are uniformly distributed at the circumference, and cutouts, which are adapted thereto, at the bearing panel (30) and beaker support (28) or stepped offsets at the bearing panel (30) and stepped offsets, which are adapted thereto, at the beaker support (28) are provided as centring device.

3. Beaker arrangement according to claim 1 or 2, **characterised in that** a connecting device, preferably a threaded connection, for mounting the beaker carrier (28) on the beaker (28) is provided and that in the mounted state a foot section (26) of the beaker (22) presses the annular section (56) of the bearing panel (30) against the annular collar (66) of the beaker support (28).

4. Beaker arrangement according to one of claims 1 to 3, **characterised in that** a compensating gap (As) is provided between beaker support (28) and radially outside the annular section (56) of the bearing panel (30).

5. Beaker arrangement according to one of claims 1 to 4, **characterised in that** a further connecting device, preferably a bayonet connection, is provided between beaker support (28) and kitchen appliance (10), wherein the bayonet connection is arranged concentrically with respect to the axis (13) of the tool shaft (12).

6. Beaker arrangement according to one of claims 1 to 5, **characterised in that** the bearing panel (30) downwardly forms a part of a seal of the beaker (22).

7. Beaker arrangement according to one of claims 1 to 6, **characterised in that** an annular seal (58) for sealing the beaker (22) when fitted is provided between annular section (56) of the bearing panel (30) and annular foot section (26) of the beaker (22).

8. Beaker arrangement according to one of claims 1 to 7, **characterised in that** the bearing panel (30) is raised from its centring when the beaker (22) is removed.

## Revendications

1. Agencement de récipient pour un appareil de cuisine comprenant un récipient (22), une flasque (30) logeant un arbre d'outil (12), un porte-récipient (28) et un dispositif de centrage, qui positionne la flasque (30) par rapport au porte-récipient (28) sur le même axe que l'axe (13) de l'arbre d'outil (12), le porte-récipient (28) ayant une collerette (66) radiale et annulaire, sur laquelle s'applique une partie (56) radiale et annulaire de la flasque (30), **caractérisé en ce que** le dispositif de centrage est disposé radialement à l'intérieur de la collerette (66) radiale du porte-récipient (28) et de la partie (56) annulaire de la flasque (30).

2. Agencement de récipient selon la revendication 1, **caractérisé en ce qu'**il est prévu comme dispositif de centrage des saillies s'étendant axialement et réparties uniformément sur le pourtour et des évidements adaptés à ces saillies sur la flasque (30) et sur le porte-récipient (28) ou des décrochements étagés sur la flasque (30) et des décrochements étagés adaptés à cet effet sur le porte-récipient (28).

3. Agencement de récipient selon la revendication 1 ou 2, **caractérisé en ce qu'**un dispositif de liaison, de préférence une liaison filetée, est prévu sur le récipient (22) pour le montage du porte-récipient (28), et **en ce que**, dans l'état monté, une partie de base (26) du récipient (22) presse la partie (56) annulaire de la flasque (30) contre la collerette (66) annulaire du porte-récipient (28).

4. Agencement de récipient selon l'une quelconque des revendications 1 à 3, **caractérisé en ce qu'**une fente de compensation (Δs) est prévue entre le porte-récipient (28) et radialement à l'extérieur de la partie (56) annulaire de la flasque (30).

5. Agencement de récipient selon l'une quelconque des revendications 1 à 4, **caractérisé en ce qu'**un autre dispositif de liaison, de préférence une liaison à baïonnette, est prévu entre le porte-récipient (28) et l'appareil de cuisine (10), la liaison à baïonnette étant disposée concentriquement à l'axe (13) de l'arbre d'outil (12).

6. Agencement de récipient selon l'une quelconque des revendications 1 à 5, **caractérisé en ce que** la flasque (30) forme une partie d'une étanchéité du récipient (22) vers le bas.

7. Agencement de récipient selon l'une quelconque des revendications 1 à 6, **caractérisé en ce qu'**un joint (58) annulaire destiné à l'étanchéité du récipient (22) posé dessus est prévu entre la partie (56) annulaire de la flasque (30) et la partie de base (26) annulaire du récipient (22).

8. Agencement de récipient selon l'une quelconque des revendications 1 à 7, **caractérisé en ce que** la flasque (30) est soulevée de son centrage lorsque le récipient (22) est enlevé.
